# EUROPÄISCHE PATENTANMELDUNG

(11) **EP 4 316 263 A2**
(43) Veröffentlichungstag der Anmeldung: **07.02.2024**
(21) Anmeldenummer: 23209160.3
(22) Anmeldetag: 18.04.2018
(51) Int. Cl.: A23J 3/30

(54) **VERFAHREN ZUR HERSTELLUNG EINES FLEISCHERSATZERZEUGNISSES UND FLEISCHERSATZERZEUGNIS**

(30) Priorität: 03.05.2017 DE 102017109419
(62) Teilanmeldung aus: 18167930.9
(71) Anmelder: Novel Vegan Crafts GmbH & Co. KG, 48149 Münster (DE)
(72) Erfinder: Entemeier, Deria, 48739 Legden (DE)
(74) Vertreter: Andrejewski - Honke Patent- und Rechtsanwälte Partnerschaft mbB

(57) **Zusammenfassung**

Die Erfindung betrifft ein Verfahren zur Herstellung eines Fleischersatzerzeugnisses, wobei zumindest ein bindungsspaltendes Enzym verwendet wird. Dabei wird zumindest eine Grundmischung erzeugt, die zumindest Wasser enthält und die einen pH-Wert aufweist, bzw. deren pH-Wert derart eingestellt wird, dass der pH-Wert im Arbeitsbereich des zumindest einen verwendeten bindungsspaltenden Enzymes liegt. Es wird anschließend zumindest eine Fleischersatzmischung, durch Hinzufügen des zumindest einen bindungsspaltenden Enzyms und einer Proteinbasis, die zumindest ein pflanzliches Protein enthält, zur Grundmischung, erzeugt. In der Folge wird die zumindest eine Fleischersatzmischung zur Erzeugung eines Fleischersatzerzeugnisses temperiert.

## Beschreibung

Die Erfindung betrifft ein Verfahren zur Herstellung eines Fleischersatzerzeugnisses. Außerdem betrifft die Erfindung ein Fleischersatzerzeugnis.

Verfahren zur Herstellung von Fleischersatzerzeugnissen sind aus der Praxis in unterschiedlichen Ausführungsformen prinzipiell bekannt. Fleischersatzerzeugnisse werden beispielsweise als Fleischimitate bei vegetarischen bzw. veganen Ernährungsformen verwendet oder kommen als kostengünstige Alternative zu herkömmlichem Fleisch bzw. herkömmlichen Fleischprodukten zum Einsatz. Die aus der Praxis bekannten Verfahren zeichnen sich allerdings oftmals durch den Nachteil aus, dass die hergestellten Fleischersatzerzeugnisse den an sie gestellten Anforderungen nicht in ausreichendem Maße genügen. Beispielsweise besitzen die mit den bekannten Verfahren hergestellten Fleischersatzerzeugnisse in der Regel eine Konsistenz, die kaum Ähnlichkeit mit herkömmlichen Fleischprodukten aufweist. Dies gilt sowohl für das Rohprodukt als auch für das verarbeitete, insbesondere für das gebratene oder gekochte, Produkt. Die mit den aus der Praxis bekannten Verfahren hergestellten Fleischersatzerzeugnisse besitzen oftmals - insbesondere nach der Verarbeitung durch Braten oder Kochen - eine zähe bzw. gummiartige und trockene Konsistenz. Fernerhin sind Geruch und Geschmack der mit diesen Verfahren hergestellten Fleischersatzerzeugnisse oftmals nicht zufriedenstellend, da auch in dieser Hinsicht kaum Ähnlichkeit mit herkömmlichem Fleisch bzw. herkömmlichen Fleischprodukten besteht. Mit anderen Worten haben die aus der Praxis bekannten Fleischersatzerzeugnisse oftmals allenfalls hinsichtlich ihrer Form und ihrem äußeren Erscheinungsbild nach eine Ähnlichkeit mit herkömmlichem Fleisch bzw. herkömmlichen Fleischprodukten, wohingegen hinsichtlich ihrer Konsistenz, ihres Geschmackes und ihres Geruches sowohl im rohen, als auch im verarbeiteten Zustand kaum Ähnlichkeit zu herkömmlichem Fleisch bzw. herkömmlichen Fleischprodukten besteht. Zudem sind die aus der Praxis bekannten Verfahren zur Herstellung von Fleischersatzerzeugnissen oftmals sehr aufwendig und kostenintensiv. Insofern besteht Verbesserungsbedarf.

Der Erfindung liegt folglich das technische Problem zugrunde, ein Verfahren der eingangs genannten Art anzugeben, bei dem die vorstehend beschriebenen Nachteile effektiv und funktionssicher vermieden werden können und mit dem insbesondere ein Fleischersatzprodukt hergestellt werden kann, das hinsichtlich seiner Konsistenz, seines Geschmackes und seines Geruches große Ähnlichkeit zu herkömmlichem Fleisch bzw. herkömmlichen Fleischprodukten besitzt, allen Anforderungen genügt und das zudem einfach, funktionssicher und kostengünstig durchführbar ist. Fernerhin liegt der Erfindung das technische Problem zugrunde, ein Fleischersatzerzeugnis anzugeben, das die vorstehend beschriebenen Anforderungen erfüllt.

Zur Lösung des technischen Problems lehrt die Erfindung ein Verfahren zur Herstellung eines Fleischersatzerzeugnisses gemäß Patentanspruch 1.

Arbeitsbereich des zumindest einen verwendeten bindungsspaltenden Enzymes meint im Rahmen der Erfindung insbesondere denjenigen Bereich hinsichtlich zumindest eines Parameters (beispielsweise pH-Wert, Temperatur), in dem das zumindest eine verwendete bindungsspaltende Enzym eine Aktivität bzw. hohe Aktivität hinsichtlich bindungsspaltender Reaktionen zeigt. Das zumindest eine bindungsspaltende Enzym ist in diesem Parameterbereich bzw. im Arbeitsbereich aktiver bzw. erheblich aktiver als außerhalb des Parameterbereiches bzw. des Arbeitsbereiches. Das Aktivitätsmaxium des zumindest einen verwendeten bindungsspaltenden Enzymes liegt also innerhalb des Arbeitsbereiches. Außerhalb dieses Arbeitsbereiches nimmt die Aktivität des Enzymes demnach deutlich ab bzw. sinkt diese Aktivität außerhalb des Arbeitsbereiches auf Null, so dass beim Überschreiten kritischer Parameterwerte das Enzym vollständig zerstört bzw. im Wesentlichen vollständig zerstört werden kann. Der jeweilige Arbeitsbereich - insbesondere hinsichtlich des pH-Wertes und/oder des Temperaturfensters - hängt also jeweils von dem verwendeten bindungsspaltenden Enzym ab.

Fleischähnliche Konsistenz meint im Rahmen der Erfindung insbesondere eine Konsistenz des Fleischersatzerzeugnisses, die herkömmlichem Fleisch bzw. herkömmlichen Fleischprodukten hinsichtlich des Verdichtungsdruckpunktes, der Reißeigenschaften bzw. der Zähigkeit sowie der Saftigkeit im rohen und/oder im verarbeiteten Zustand sehr ähnlich ist.

Die Einstellung des pH-Wertes der zumindest einen Grundmischung erfolgt im Rahmen des erfindungsgemäßen Verfahrens insbesondere durch Zusätze, die zur Regulierung des pH-Wertes geeignet sind - zweckmäßigerweise durch saure und/oder basische Zusätze -. Es liegt auch im Rahmen des erfindungsgemäßen Verfahrens, dass die Grundmischung zumindest ein Puffersystem zur Einstellung bzw. Regulierung des pH-Wertes aufweist.

Temperierung meint im Rahmen des erfindungsgemäßen Verfahrens insbesondere die Behandlung bei einer bestimmten Temperatur über einen bestimmten Zeitraum. Es liegt auch im Rahmen der Erfindung, dass Temperierung die Behandlung mit unterschiedlichen, aufeinander folgenden Temperaturen für eine bestimmte Zeit meint, also gleichsam ein Temperaturprogramm bzw. eine Temperaturrampe. Zur Temperierung können beispielsweise die unterschiedlichen Temperaturen bzw. die Temperatur konstant gehalten werden und/oder die Temperatur kontinuierlich verändert werden. Es ist in diesem Zusammenhang also auch möglich, dass die Temperierung mehrere Temperierungsschritte bei unterschiedlichen Temperaturen umfasst.

Eine besonders bevorzugte Ausführungsform des erfindungsgemäßen Verfahrens ist dadurch gekennzeichnet, dass das zumindest eine bindungsspaltende Enzym eine Hydrolase, bevorzugt eine Peptidbindungshydrolase, besonders bevorzugt eine neutrale Peptidbindungshydrolase ist. Neutrale Peptidbindungshydrolase meint im Rahmen der Erfindung insbesondere eine Peptidbindungshydrolase, die in einem neutralen pH-Wert-Bereich aktiv hinsichtlich der Hydrolyse von Peptidbindungen ist. Der Arbeitsbereich dieser neutralen Peptidbindungshydrolasen liegt somit im neutralen bzw. im Wesentlichen im neutralen pH-Wert-Bereich und das Akivitätsmaximum liegt innerhalb dieses Arbeitsbereiches. Grundsätzlich liegt es auch im Rahmen der Erfindung, dass Peptidbindungshydrolasen verwendet werden, die insbesondere in saurem oder alkalischem Milieu ihre größte Aktivität besitzen, deren Arbeitsbereich folglich im sauren oder alkalischen pH-Wert-Bereich liegt. Das zumindest eine bindungsspaltende Enzym katalysiert vorzugsweise die hydrolytische Spaltung von Bindungen, bevorzugt die Hydrolyse von Peptidbindungen, besonders bevorzugt die Hydrolyse der Peptidbindungen der Proteinbasis.

Gemäß einer bevorzugten Ausführungsform des erfindungsgemäßen Verfahrens enthält die zumindest eine Fleischersatzmischung zwischen 0,001 und 1 Gew.-% des zumindest einen bindungsspaltenden Enzyms. Es empfiehlt sich, dass die Fleischersatzmischung zwischen 0,005 und 0,5 Gew.-%, bevorzugt zwischen 0,01 und 0,1 Gew.-%, besonders bevorzugt zwischen 0,01 und 0,05 Gew.-% des zumindest einen bindungsspaltenden Enzyms enthält. Vorzugsweise ist das zumindest eine bindungsspaltende Enzym aktiv hinsichtlich der Hydrolyse von Peptidbindungen. Dann kann insbesondere die Geschwindigkeit bzw. die Reaktionsgeschwindigkeit der Hydrolyse der Peptidbindungen durch den Massenanteil des zumindest einen bindungsspaltenden Enzyms in der Fleischersatzmischung beeinflusst werden.

Nach besonders bevorzugter Ausgestaltung des erfindungsgemäßen Verfahrens enthält die Fleischersatzmischung zwischen 9 und 80 Gew.-% der Proteinbasis. Es empfiehlt sich, dass die Fleischersatzmischung zwischen 14 und 70 Gew.-%, bevorzugt zwischen 19 und 50 Gew.-% der Proteinbasis enthält.

Eine besonders empfohlene Ausführungsform des erfindungsgemäßen Verfahrens ist dadurch gekennzeichnet, dass die Fleischersatzmischung zwischen 19 und 90 Gew.-%, bevorzugt zwischen 29 und 85 Gew.-%, besonders bevorzugt zwischen 49 und 80 Gew.-% der Grundmischung enthält. Erfindungsgemäß enthält die Grundmischung zumindest Wasser. Es liegt grundsätzlich auch im Rahmen der Erfindung, dass die Grundmischung ein Protein enthält. Empfohlenermaßen ergeben die Massenanteile des zumindest einen bindungsspaltenden Enzymes, der Proteinbasis und der Grundmischung zusammen 100 Gew.-%.

Erfindungsgemäß enthält die Proteinbasis zumindest ein pflanzliches Protein. Es liegt im Rahmen der Erfindung, dass die Proteinbasis zumindest 3 Gew.-% zumindest eines pflanzlichen Proteins enthält, vorzugsweise zumindest 5 Gew.-%, bevorzugt zumindest 10 Gew.-% zumindest eines pflanzlichen Proteins enthält. Es liegt weiterhin im Rahmen der Erfindung, dass die Proteinbasis Wasser aufweist. Gemäß einer empfohlenen Ausführungsform des erfindungsgemäßen Verfahrens enthält die Proteinbasis zumindest Gluten, bevorzugt Weizengluten. Eine alternative Ausgestaltung des erfindungsgemäßen Verfahrens ist dadurch gekennzeichnet, dass die Proteinbasis zumindest Sojaeiweiß aufweist. Grundsätzlich liegt es auch im Rahmen der Erfindung, dass die Proteinbasis zumindest eine Mischung von Gluten, bevorzugt Weizengluten, mit Sojaeiweiß enthält. Vorzugsweise enthält die Proteinbasis im Wesentlichen pflanzliche Proteine, besonders bevorzugt beinhaltet die Proteinbasis ausschließlich pflanzliche Proteine. Dann kann insbesondere ein veganes Fleischersatzerzeugnis durch das erfindungsgemäße Verfahren hergestellt werden. Gemäß einer alternativen Ausgestaltung des erfindungsgemäßen Verfahrens weist die Proteinbasis eine Mischung aus pflanzlichen und tierischen Proteinen auf. Grundsätzlich liegt es auch im Rahmen des erfindungsgemäßen Verfahrens, dass die Proteinbasis im Wesentlichen tierische Proteine beinhaltet. Tierisches Protein meint im Rahmen der Erfindung insbesondere ein tierfleischfreies tierisches Protein bzw. ein Protein, das kein Tierfleisch bildet.

Es empfiehlt sich, dass die Grundmischung Zusätze zur Aromatisierung des Fleischersatzerzeugnisses aufweist. Bei diesen Zusätzen kann es sich um künstliche und/oder natürliche Aromastoffe, Gewürze oder dergleichen handeln. Vorzugsweise werden diese Zusätze entsprechend der späteren Anwendung des Fleischersatzerzeugnisses ausgewählt. Es liegt im Übrigen auch im Rahmen der Erfindung, dass der pH-Wert der Grundmischung durch die in der Grundmischung enthaltenen Zusätze derart eingestellt wird, dass der pH-Wert im Arbeitsbereich des zumindest einen verwendeten bindungsspaltenden Enzymes liegt. Dies kann beispielsweise durch saure Zusätze wie Essig, Zitronensaft oder dergleichen und/oder durch basische Zusätze geschehen. Eine weitere Ausgestaltung des erfindungsgemäßen Verfahrens ist dadurch gekennzeichnet, dass die Grundmischung Zusätze zur Färbung des Fleischersatzerzeugnisses enthält. Dabei kann es sich beispielsweise um natürliche und/oder künstliche Farbstoffe handeln.

Eine bevorzugte Ausführungsform des erfindungsgemäßen Verfahrens ist dadurch gekennzeichnet, dass die Temperierung der zumindest einen Fleischersatzmischung in einem ersten Temperierungsschritt bei einer Temperatur T₁ erfolgt, die bevorzugt im Arbeitsbereich des zumindest einen bindungsspaltenden Enzymes liegt, und dass die Temperierung in einem zweiten Temperierungsschritt bei einer Temperatur T₂ erfolgt, die bevorzugt oberhalb der Temperatur T₁ liegt. Es empfiehlt sich, dass das zumindest eine bindungsspaltende Enzym bei der Temperatur T₁, die bevorzugt im Arbeitsbereich des bindungsspaltenden Enzymes liegt, aktiv ist. Bei der Temperatur T₁ erfolgt folglich insbesondere die Spaltung von Bindungen, bevorzugt von Peptidbindungen, besonders bevorzugt die hydrolytische Spaltung von Peptidbindungen der Proteinbasis. Auf diese Weise wird die Konsistenz der Fleischersatzmischung verändert, so dass insbesondere ein Fleischersatzerzeugnis mit fleischähnlicher Konsistenz resultiert. Vorzugsweise wird bei der Temperatur T₂, die insbesondere außerhalb des Arbeitsbereiches des zumindest einen bindungsspaltenden Enzymes liegt, das zumindest eine bindungsspaltende Enzym vollständig zerstört bzw. im Wesentlichen vollständig zerstört. Zerstörung des zumindest einen bindungsspaltenden Enzymes meint im Rahmen der Erfindung insbesondere die Denaturierung des zumindest einen bindungsspaltenden Enzymes. Das zumindest eine bindungsspaltende Enzym ist dann nicht mehr aktiv bzw. im Wesentlichen nicht mehr aktiv, insbesondere hinsichtlich bindungsspaltender Reaktionen bzw. der Hydrolyse von Peptidbindungen.

Vorzugsweise erfolgt die Temperierung der zumindest einen Fleischersatzmischung bei vermindertem Druck bzw. Vakuum. Durch die Temperierung der Fleischersatzmischung bei vermindertem Druck bzw. unter Vakuum resultiert insbesondere ein Fleischersatzprodukt mit gleichmäßiger Struktur, bei dem beispielsweise Lufteinschlüsse und Blasenbildungen weitgehend vermieden werden können.

Gemäß einer alternativen Ausgestaltung des erfindungsgemäßen Verfahrens werden zwei Fleischersatzmischungen A und B jeweils gemäß der Schritte a) und b) hergestellt, wobei die Fleischersatzmischungen A und B anschließend zu einem Aggregat zusammengefügt, insbesondere schichtweise bzw. im Wesentlichen schichtweise bevorzugt in alternierender Schichtenfolge zu einem Aggregat zusammengefügt werden und wobei das Aggregat aus den Fleischersatzmischungen A und B in der Folge gemäß dem Schritt c) temperiert wird.

Zur Lösung des technischen Problems lehrt die Erfindung weiterhin ein Fleischersatzerzeugnis gemäß Patentanspruch 12.

Vorzugsweise ist die Konsistenz des Fleischersatzerzeugnisses mittels zumindest einer Hydrolase, bevorzugt mittels zumindest einer Peptidbindungshydrolase fleischähnlich eingestellt. Es liegt im Rahmen der Erfindung, dass das zumindest eine bindungsspaltende Enzym im Fleischersatzerzeugnis nicht mehr in seiner ursprünglichen Form vorhanden ist bzw. im Wesentlichen nicht mehr in seiner ursprünglichen Form vorhanden ist. Insbesondere ist das zumindest eine bindungsspaltende Enzym im Fleischersatzerzeugnis, besonders bevorzugt durch vorherige Erwärmung bzw. Temperierung, denaturiert bzw. im Wesentlichen denaturiert.

Eine besonders bevorzugte Ausführungsform des erfindungsgemäßen Fleischersatzerzeugnisses ist dadurch gekennzeichnet, dass das Fleischersatzerzeugnis zumindest Gluten, bevorzugt Weizengluten enthält. Es liegt auch im Rahmen der Erfindung, dass das Fleischersatzerzeugnis zumindest Sojaeiweiß beinhaltet. Grundsätzlich kann das Fleischersatzerzeugnis auch zumindest eine Mischung aus Gluten, bevorzugt Weizengluten, mit Sojaeiweiß aufweisen. Gemäß einer bevorzugten Ausführungsvariante enthält das Fleischersatzerzeugnis keine tierischen Proteine bzw. im Wesentlichen keine tierischen Proteine. Eine alternative Ausgestaltung der Erfindung ist dadurch gekennzeichnet, dass das Fleischersatzerzeugnis zumindest eine Mischung aus tierischen und pflanzlichen Proteinen beinhaltet.

Vorzugsweise enthält das Fleischersatzerzeugnis zwischen 9 und 80 Gew.-%, bevorzugt zwischen 14 und 70 Gew.-%, besonders bevorzugt zwischen 19 und 50 Gew.-% der Proteinbasis.

Es empfiehlt sich, dass das Fleischersatzerzeugnis zwischen 19 und 90 Gew.-%, bevorzugt zwischen 29 und 85 Gew.-%, besonders bevorzugt zwischen 49 und 80 Gew.-% der Grundmischung enthält. Es liegt im Rahmen der Erfindung, dass sich die Massenanteile der Proteinbasis und der Grundmischung, sowie des zumindest einen bindungsspaltenden Enzymes bzw. des zumindest einen denaturierten bindungsspaltenden Enzymes zu 100 Gew.-% ergänzen.

Gemäß besonders empfohlener Ausführungsform der Erfindung, weist die Grundmischung Zusätze zur Aromatisierung des Fleischersatzerzeugnisses auf. Bei diesen Zusätzen kann es sich insbesondere um künstliche und/oder natürliche Aromastoffe, Gewürze und dergleichen handeln. Es liegt im Übrigen im Rahmen der Erfindung, dass die Grundmischung Zusätze zur Färbung des Fleischersatzerzeugnisses aufweist. Dabei kann es sich beispielsweise um natürliche und/oder künstliche Farbstoffe handeln.

Eine bevorzugte Ausgestaltung des erfindungsgemäßen Fleischersatzerzeugnisses ist dadurch gekennzeichnet, dass zwei Fleischersatzmischungen A und B das Fleischersatzerzeugnis bilden. Vorzugsweise bilden dabei die beiden Fleischersatzmischungen A und B das Fleischersatzerzeugnis als Aggregat, besonders bevorzugt als Schichtaggregat. Es liegt im Rahmen der Erfindung, dass das Schichtaggregat aus alternierenden Schichten der beiden Fleischersatzmischungen A und B besteht. Bevorzugt ist das Fleischersatzerzeugnis aus den Fleischersatzmischungen A und B ein Speck- bzw. Baconimitat. Gemäß einer alternativen Ausgestaltung der Erfindung ist das Fleischersatzerzeugnis ein Steak- oder Kotelettimitat, bei dem es sich bevorzugt um ein Aggregat aus zumindest zwei Fleischersatzmischungen handelt. Grundsätzlich liegt es auch im Rahmen der Erfindung, dass das Fleischersatzerzeugnis aus mehr als zwei Fleischersatzmischungen besteht, beispielsweise aus drei oder vier Fleischersatzmischungen besteht, die das Fleischersatzerzeugnis besonders bevorzugt als Aggregat bilden. Prinzipiell liegen die verschiedensten Fleischimitate, beispielsweise Speck bzw. Bacon, Steak, Kotelett, Schnitzel, Wurst oder dergleichen im Rahmen der Erfindung, wobei die Imitate aus einer oder mehreren Fleischersatzmischungen hergestellt sein können.

Der Erfindung liegt die Erkenntnis zugrunde, dass sich das erfindungsgemäße Verfahren zur Herstellung eines Fleischersatzerzeugnisses, sowie das erfindungsgemäße Fleischersatzerzeugnis durch besondere Vorteile gegenüber den aus dem Stand der Technik bekannten Maßnahmen auszeichnen. Das Fleischersatzerzeugnis weist im rohen und insbesondere im verarbeiteten bzw. gebratenen und/oder gekochten Zustand eine fleischähnliche Konsistenz auf. Das Fleischersatzerzeugnis ist dabei hinsichtlich seines Verdichtungsdruckpunktes, seiner Struktur und seiner Reißeigenschaften sehr ähnlich zu herkömmlichen Fleischprodukten bzw. herkömmlichem Fleisch, so dass die gummiartige Konsistenz vieler aus der Praxis bekannter Fleischersatzprodukte nahezu gänzlich vermieden werden kann. Auch beim Verzehr des erfindungsgemäßen Fleischersatzproduktes bzw. beim Kauen resultiert hinsichtlich der Konsistenz, des Geschmackes und des Geruches ein Eindruck, der herkömmlichen Fleischprodukten äußerst ähnlich ist. Hervorzuheben ist außerdem, dass das erfindungsgemäße Verfahren zur Herstellung des Fleischersatzerzeugnisses sowie das Fleischersatzerzeugnis flexibel einsetzbar und kostengünstig sind.

## Patentansprüche

1. Verfahren zur Herstellung eines Fleischersatzerzeugnisses, wobei zumindest ein bindungsspaltendes Enzym verwendet wird, umfassend folgende Schritte:
a) Erzeugung zumindest einer Grundmischung, die zumindest Wasser enthält und die einen pH-Wert aufweist, bzw. deren pH-Wert derart eingestellt wird, dass der pH-Wert im Arbeitsbereich des zumindest einen verwendeten bindungsspaltenden Enzymes liegt;
b) Erzeugung zumindest einer Fleischersatzmischung durch Hinzufügen des zumindest einen bindungsspaltenden Enzyms und einer Proteinbasis, die zumindest ein pflanzliches Protein enthält, zur Grundmischung;
c) Temperierung der zumindest einen Fleischersatzmischung zur Erzeugung eines Fleischersatzerzeugnisses, insbesondere mit fleischähnlicher Konsistenz,
wobei das zumindest eine bindungsspaltende Enzym eine Peptidbindungshydrolase ist, wobei die Proteinbasis zumindest Gluten enthält, wobei die Grundmischung Zusätze zur Aromatisierung und/oder zur Färbung des Fleischersatzerzeugnisses aufweist,
wobei die Temperierung der zumindest einen Fleischersatzmischung in einem ersten Temperierungsschritt bei einer Temperatur T₁ erfolgt, die im Arbeitsbereich des Enzymes liegt und wobei die Temperierung in einem zweiten Temperierungsschritt bei einer Temperatur von T₂ erfolgt, die oberhalb der Temperatur T₁ liegt und bei welcher Temperatur T₂ das zumindest eine bindungsspaltende Enzym vollständig zerstört bzw. im Wesentlichen vollständig zerstört wird.

2. Verfahren nach Anspruch 1, wobei das zumindest eine bindungsspaltende Enzym eine neutrale Peptidbindungshydrolase ist.

3. Verfahren nach einem der Ansprüche 1 oder 2, wobei die Fleischersatzmischung zwischen 0,001 und 1 Gew.-%, vorzugsweise zwischen 0,005 und 0,5 Gew.-%, bevorzugt zwischen 0,01 und 0,1 Gew.-%, besonders bevorzugt zwischen 0,01 und 0,05 Gew.-% des bindungsspaltenden Enzyms enthält.

4. Verfahren nach einem der Ansprüche 1 bis 3, wobei die Fleischersatzmischung zwischen 9 und 80 Gew.-%, bevorzugt zwischen 14 und 70 Gew.-%, besonders bevorzugt zwischen 19 und 50 Gew.-%, der Proteinbasis enthält.

5. Verfahren nach einem der Ansprüche 1 bis 4, wobei die Fleischersatzmischung zwischen 20 und 90 Gew.-%, bevorzugt zwischen 30 und 85 Gew.-%, besonders bevorzugt zwischen 50 und 80 Gew.-%, der Grundmischung enthält.

6. Verfahren nach einem der Ansprüche 1 bis 5, wobei die Proteinbasis zumindest 3 Gew.-% zumindest einen pflanzlichen Proteins enthält, vorzugsweise zumindest 5 Gew.-%, bevorzugt zumindest 10 Gew.-%, zumindest eines pflanzlichen Proteins enthält.

7. Verfahren nach einem der Ansprüche 1 bis 6, wobei die Proteinbasis zumindest Weizengluten und/oder Sojaeiweiß enthält.

8. Verfahren nach einem der Ansprüche 1 bis 7, wobei die Proteinbasis ausschließlich pflanzliche Proteine enthält.

9. Verfahren nach einem der Ansprüche 1 bis 7, wobei die Proteinbasis eine Mischung aus pflanzlichen und tierischen Proteinen enthält.

10. Verfahren nach einem der Ansprüche 1 bis 9, wobei die Temperierung der Fleischersatzmischung bei vermindertem Druck bzw. Vakuum erfolgt.

11. Verfahren nach einem der Ansprüche 1 bis 10, wobei zwei Fleischersatzmischungen A und B jeweils gemäß der Schritte a) und b) hergestellt werden, wobei die Fleischersatzmischungen A und B anschließend zu einem Aggregat zusammengefügt, insbesondere schichtweise bzw. im Wesentlichen schichtweise zu einem Aggregat zusammengefügt werden und wobei das Aggregat aus den Fleischersatzmischungen A und B in der Folge gemäß dem Schritt c) temperiert wird.

12. Fleischersatzerzeugnis, hergestellt durch ein Verfahren nach einem der Ansprüche 1 bis 11, wobei das Fleischersatzerzeugnis zumindest eine Fleischersatzmischung aufweist, die zumindest eine Proteinbasis enthält, welche zumindest ein pflanzliches Protein aufweist, wobei die zumindest eine Fleischersatzmischung zumindest eine Grundmischung enthält, die zumindest Wasser enthält, wobei die Konsistenz des Fleischersatzerzeugnisses mittels zumindest eines bindungsspaltenden Enzymes fleischähnlich eingestellt ist.

13. Fleischersatzerzeugnis nach Anspruch 12, wobei das Fleischersatzerzeugnis zumindest Weizengluten und/oder Sojaeiweiß enthält.

14. Fleischersatzerzeugnis nach Anspruch 12 oder 13, wobei das Fleischersatzerzeugnis zwischen 9 und 80 Gew.-%, bevorzugt zwischen 14 und 70 Gew.-%, besonders bevorzugt zwischen 19 und 50 Gew.-%, der Proteinbasis enthält.

15. Fleischersatzerzeugnis nach einem der Ansprüche 12 bis 14, insbesondere hergestellt durch ein Verfahren nach Anspruch 11, wobei zwei Fleischersatzmischungen A und B das Fleischersatzerzeugnis als Aggregat bilden, insbesondere als Schichtaggregat bilden und wobei das Fleischersatzerzeugnis aus den Fleischersatzmischungen A und B ein Speck- bzw. Baconimitat ist.
